(19) **Europäisches Patentamt European Patent Office Office européen des brevets**

(11) **EP 4 459 321 A1**

(12) **EUROPEAN PATENT APPLICATION**
published in accordance with Art. 153(4) EPC

(43) Date of publication:
06.11.2024 Bulletin 2024/45

(21) Application number: 22913177.6

(22) Date of filing: 15.06.2022

(51) International Patent Classification (IPC):
*G01S 7/497* (2006.01)

(52) Cooperative Patent Classification (CPC):
G01S 7/483; G01S 7/497; G01S 17/89;
G01S 17/93; Y02A 90/10

(86) International application number:
PCT/CN2022/098786

(87) International publication number:
WO 2023/123888 (06.07.2023 Gazette 2023/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.12.2021 CN 202111659798

(71) Applicant: Hesai Technology Co., Ltd.
Shanghai 201821 (CN)

(72) Inventors:
• ZHAO, Shensen
Shanghai 201821 (CN)
• XIANG, Shaoqing
Shanghai 201821 (CN)

(74) Representative: Appelt, Christian W.
Boehmert & Boehmert
Anwaltspartnerschaft mbB
Pettenkoferstrasse 22
80336 München (DE)

(54) **LASER RADAR DETECTION METHOD AND LASER RADAR**

(57) A detection method of a LiDAR and a LiDAR are provided. The LiDAR includes: a scanner module, the scanner module includes: at least one reflection surface; and the detection method includes: determining multiple corrective detector units based on a pre-stored inclination angle of a surface to be corrected, the surface to be corrected being one of the at least one reflection surface; and performing signal collection by the multiple corrective detector units to determine a point cloud image. Based on the technical solutions of this disclosure, the inclination angle of the surface to be corrected can be compensated to ensure that the determined corrective detector unit corresponds to a fixed field of view direction. Particularly when the scanner module includes multiple reflection surfaces, different corrective detector units are determined based on respective inclination angles of the multiple reflection surfaces, to ensure that each of the reflection surfaces corresponds to a fixed field of view direction based on the determined corrective detector unit, causing inhibition of the occurrence of point cloud jitter among the multiple reflective surfaces.

FIG. 11

## Description

This application claims priority to Chinese Patent Application No. 202111659798.7 titled "DETECTION METHOD OF LIDAR AND LIDAR" and filed with the China National Intellectual Property Administration on December 30, 2021, the content of which is incorporated herein by reference in its entirety.

## TECHNICAL FIELD

This disclosure relates to laser detection and, in particular, relates to a detection method of a LiDAR and a LiDAR.

## BACKGROUND

LiDAR (light detection and ranging) is a commonly used ranging sensor characterized by long detection range, high resolution, and less environmental interference, and is widely used in fields such as smart robots, unmanned aerial vehicles, and autonomous driving. The LiDAR works by using the time taken by the laser to travel back and forth between the LiDAR and the target, or the frequency shift generated by the frequency modulated continuous light traveling back and forth between the LiDAR and the target, to evaluate information such as the distance or speed of the target.

A LiDAR emits detection light into a three-dimensional space, and the detection light is reflected by the target to be detected, forming an echo signal. The LiDAR receives the echo signal to determine a point cloud image. One type of LiDAR performs detection by reflecting detection light through a reflection surface of a scanner apparatus into a three-dimensional space.

Due to limitations of the manufacturing process, position-orientation control of the reflection surface in the scanner apparatus is challenging and lacks precision, which can easily lead to insufficient light path accuracy and poor stability, manifested as the phenomenon of point cloud jitter.

## SUMMARY

Problems to be solved in this disclosure are to provide a detection method of a LiDAR and a LiDAR, to reduce impact of a position and orientation of a reflection surface on a light path, and inhibit occurrence of point cloud jitter.

To solve the problems, this disclosure provides a detection method of a LiDAR. The LiDAR includes a scanner module, the scanner module includes: at least one reflection surface; and the detection method includes: determining multiple corrective detector units based on a pre-stored inclination angle of a surface to be corrected, the surface to be corrected being one of the at least one reflection surface; and performing signal collection by the multiple corrective detector units to determine a point cloud image.

Optionally, the scanner module includes: multiple reflection surfaces; and the detection method further includes: determining the surface to be corrected prior to the determining the multiple corrective detector units, the surface to be corrected being one of the multiple reflection surfaces; and determining the inclination angle of the surface to be corrected based on the determined surface to be corrected. In the step of the determining the multiple corrective detector units, the multiple corrective detector units are determined based on the determined inclination angle of the surface to be corrected, and the multiple corrective detector units correspond to the surface to be corrected.

Optionally, the LiDAR includes a light-emitter module, the light-emitter module includes: multiple light-emitter units, and there is a one-to-one correspondence between the multiple light-emitter units and the multiple corrective detector units; and the step of the performing signal collection by the multiple corrective detector units includes: enabling the light-emitter unit to generate detection light, the detection light forming corresponding echo light after reflected by an object outside the LiDAR; and receiving the echo light by a corresponding corrective detector unit to collect signal.

Optionally, the detection method further includes: determining, after the determining the multiple corrective detector units, multiple corrective light-emitter units based on the inclination angle of the surface to be corrected in combination with the multiple corrective detector units, there being one-to-one correspondence between the multiple corrective light-emitter units and the multiple corrective detector units; and the step of the performing signal collection by the multiple corrective detector units includes: enabling the multiple corrective light-emitter units to generate detection light, the detection light forming corresponding echo light after reflected by an object outside the LiDAR; and receiving the echo light by corresponding corrective detector units to collect signal.

Optionally, each of the corrective light-emitter units includes multiple emitters.

Optionally, the emitter is an independently addressable and independently controlled laser.

Optionally, each of the corrective detector units includes multiple detectors.

Optionally, the detector is an independently addressable and independently controlled detector.

Optionally, the reflection surface rotates around a rotation shaft.

Optionally, the scanner module includes: a rotating mirror, and the reflection surface is a mirror surface of the rotating mirror.

Optionally, the LiDAR includes a light-emitter module to generate detection light; the detection light is emitted after reflected by the surface to be corrected; the emitted detection light forms echo light after reflected by an object outside the LiDAR; and the echo light is reflected by the surface to be corrected to the multiple corrective detector units.

Optionally, the inclination angle of the surface to be corrected includes: a vertical inclination angle and a horizontal inclination angle; and in the step of the determining the multiple corrective detector units, the multiple corrective detector units are determined based on the vertical inclination angle and the horizontal inclination angle.

Accordingly, this disclosure further provides a LiDAR, including: a scanner module, the scanner module includes: at least one reflection surface; and a processor apparatus configured to perform the detection method of this disclosure.

In addition, this disclosure further provides a LiDAR, including: a scanner module, the scanner module including: at least one reflection surface; a corrector module pre-storing an inclination angle of a surface to be corrected and configured to determine multiple corrective detector units based on the inclination angle of the surface to be corrected, the surface to be corrected being one of the at least one reflection surface; and a collector module configured to perform signal collection by the multiple corrective detector units to determine a point cloud image.

Optionally, the scanner module includes: multiple reflection surfaces; the LiDAR further includes: a selector module configured to determine the surface to be corrected, the surface to be corrected being one of the multiple reflection surfaces; and the corrector module determines the inclination angle of the surface to be corrected based on the surface to be corrected determined by the selector module, the corrector module determines the multiple corrective detector units based on the determined inclination angle of the surface to be corrected, and the multiple corrective detector units correspond to the surface to be corrected.

Optionally, the LiDAR includes a light-emitter module, the light-emitter module includes: multiple light-emitter units, and there is a one-to-one correspondence between the multiple light-emitter units and the multiple corrective detector units; and the collector module includes: a detection controller unit configured to control the light-emitter unit to generate detection light, the detection light forming corresponding echo light after reflected by an object outside the LiDAR; and a reception controller unit configured to control a corresponding corrective detector unit to receive the echo light to collect signal.

Optionally, the corrector module is further configured to determine multiple corrective light-emitter units based on the inclination angle of the surface to be corrected in combination with the multiple corrective detector units. There is a one-to-one correspondence between the multiple corrective light-emitter units and the multiple corrective detector units.

The collector module includes: a detection controller unit configured to control the multiple corrective light-emitter units to generate detection light, the detection light forming corresponding echo light after reflected by an object outside the LiDAR; and a reception controller unit configured to control a corresponding corrective detector unit to receive the echo light to collect signal.

Optionally, each of the corrective light-emitter units includes multiple emitters.

Optionally, the emitter is an independently addressable and independently controlled laser.

Optionally, the emitter includes: a vertical cavity surface emitting laser.

Optionally, each of the corrective detector units includes multiple detectors.

Optionally, the detector is an independently addressable and independently controlled detector.

Optionally, the detector includes: a single photon avalanche diode.

Optionally, the reflection surface rotates around a rotation shaft.

Optionally, the scanner module includes: a rotating mirror, and the reflection surface is a mirror surface of the rotating mirror.

Optionally, the LiDAR includes a light-emitter module to generate detection light; the detection light is emitted after reflected by the surface to be corrected; the emitted detection light forms echo light after reflected by an object outside the LiDAR; and the echo light is reflected by the surface to be corrected to the multiple corrective detector units.

Optionally, the inclination angle of the surface to be corrected includes: a vertical inclination angle and a horizontal inclination angle; and the corrector module determines the multiple corrective detector units based on the vertical inclination angle and the horizontal inclination angle.

Compared with the existing technologies, technical solutions of this disclosure have the following advantages:

based on the technical solutions of this disclosure, the multiple corrective detector units are determined based on the pre-stored inclination angle of the surface to be corrected to compensate for the inclination angle of the reflection surface; and signal collection is performed by the multiple corrective detector units to determine a point cloud image. Because he multiple corrective detector units are determined based on the inclination angle of the surface to be corrected, the determination of the corrective detector units can compensate for the inclination angle of the surface to be corrected to ensure that the determined detector unit corresponds to a fixed field of view direction. Particularly when the scanner module includes multiple reflection surfaces, different corrective detector units are determined based on respective inclination angles of the multiple reflection surfaces, to ensure that each of the reflection surfaces corresponds to a fixed field of view direction based on the determined corrective detector unit, causing inhibition of the occurrence of point cloud jitter among the multiple reflective surfaces.

In an optional solution of this disclosure, after the multiple corrective detector units are determined, the multiple corrective light-emitter units are determined based on the inclination angle of the surface to be corrected in combination with the multiple corrective detector units, to perform signal collection by the corrective light-emitter unit and the corrective detector unit. The determination of the multiple corrective light-emitter units can make a receiving field of view of the corrective detector units correspond to a light spot center of the received echo light, to improve the detection efficiency and ensure long ranging distance.

## BRIEF DESCRIPTION OF DRAWINGS

To more clearly describe the technical solutions of the embodiments of this disclosure or the existing technologies, the drawings to be used in the description of the embodiments or the existing technologies are briefly introduced below. Apparently, the drawings described below are merely some embodiments of this disclosure. For those of ordinary skills in the art, other drawings can also be obtained based on these drawings without making creative work.

Fig. 1 is a schematic structural diagram of a LiDAR;
Fig. 2 is a schematic diagram of a scanning field of view after the LiDAR shown in Fig. 1 is installed on a vehicle;
Fig. 3 is a schematic diagram of point cloud jitter along a vertical direction caused by a rotating mirror in the LiDAR shown in Fig. 1;
Fig. 4 is a schematic diagram of point cloud jitter along a horizontal direction caused by a rotating mirror in the LiDAR shown in Fig. 1;
Fig. 5 is a schematic diagram of a light path for changes of a receiving field of view caused by a rotating mirror in the LiDAR shown in Fig. 1;
Fig. 6 is a schematic structural diagram of a receiving array of a detector module in the LiDAR shown in Fig. 1;
Fig. 7 is a schematic structural diagram of an embodiment of a LiDAR of this disclosure;
Fig. 8 is a schematic structural diagram of a light-emitter module, a receiver module, and a processor apparatus in the embodiment of the LiDAR shown in Fig. 7;
Fig. 9 is a schematic structural diagram of an emission array of a light-emitter module of the embodiment of the LiDAR shown in Fig. 7;
Fig. 10 is a schematic structural diagram of a receiving array of a detector module of the embodiment of the LiDAR shown in Fig. 7;
Fig. 11 is a schematic flowchart of a detection method implemented by the processor apparatus in the embodiment of the LiDAR shown in Fig. 8;
Fig. 12 is a schematic diagram of an inclination angle of a reflection surface of a scanner module in the embodiment of the LiDAR shown in Fig. 7;
Fig. 13 is a schematic diagram of an inclination angle of a reflection surface of a scanner module in another embodiment of a LiDAR of this disclosure;
Fig. 14 is a schematic diagram of a light path in a vertical field of view of a detection method implemented by the processor apparatus in the embodiment of the LiDAR shown in Fig. 8;
Fig. 15 is a schematic diagram of a light path in a horizontal field of view of a detection method implemented by the processor apparatus in the embodiment of the LiDAR shown in Fig. 8;
Fig. 16 is a schematic structural diagram of a corrective light-emitter unit and a corrective detector unit during signal collection of a detection method implemented by the processor apparatus in the embodiment of the LiDAR shown in Fig. 8;
Fig. 17 is a schematic structural diagram of a light-emitter unit and a corrective detector unit during signal collection in another embodiment of a LiDAR of this disclosure; and
Fig. 18 is a functional block diagram of the processor apparatus in another embodiment of a LiDAR of this disclosure.

## DETAILED DESCRIPTION

As can be known from the BACKGROUND, a LiDAR in the existing technologies has a problem that a reflection surface of a scanner module affects the light path accuracy and stability. Here, the impact of the reflection surface of the scanner module on the light path is analyzed based on a structure of the LiDAR.

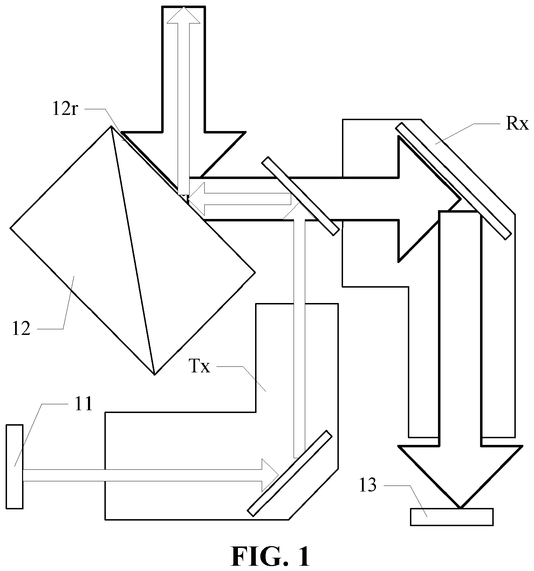

With reference to Fig. 1, a schematic structural diagram of a LiDAR is shown.

The LiDAR includes: a light-emitter module, a scanner module, and a detector module. The scanner module includes a rotating mirror.

Detection light generated by the light-emitter module 11 is projected onto a transmission optical module Tx, and the detection light transmitted by the transmission optical module Tx is emitted after reflected by a reflection surface 12r in the scanner module 12. The emitted detection light forms echo light after reflected by an external target object. The echo light is received and reflected by the reflection surface 12r in the scanner module 12, projected onto a receiving optical module Rx, transmitted by the receiving optical module Rx, and then projected onto a detector module 13.

A distance d between the external target object and the LiDAR is determined based on a time difference $\Delta t$ between a emission of the detection light by the light-emitter module 11 and reception of the echo light by the detector module 13 and based on a ranging principle of time of flight ("TOF"): $d=c*\Delta t/2$. c represents the speed of light.

The reflection surface 12r in the scanner module 12 rotates to achieve the detection light scanning. In the LiDAR as shown in Fig. 1, the rotating mirror performs 360° scanning to form a scan in a certain field of view of an external space.

A horizontal field of view perpendicular to a rotation shaft is determined by the rotating mirror, and a vertical field of view perpendicular to the horizontal field of view is jointly determined by distribution of a laser/detector in the detector module 13 of the LiDAR and a position and orientation of the reflection surface 12r in the rotating mirror (e.g., a pitch angle of the reflection surface 12r).

It can be seen that due to process limitations, the control precision of position and orientation of the reflection surface 12r is relatively low. There may be a deviation between an actual position and orientation of the reflection surface 12r and an ideal position and orientation of the reflection surface 12r during light path design. There may be an inclination angle, that is, an inclination angle of the reflection surface 12r, between the actual position and orientation and the ideal position and orientation of the reflection surface 12r. The existence of the inclination angle of the reflection surface 12r can reduce the light path accuracy of the LiDAR, thereby affecting the light path stability.

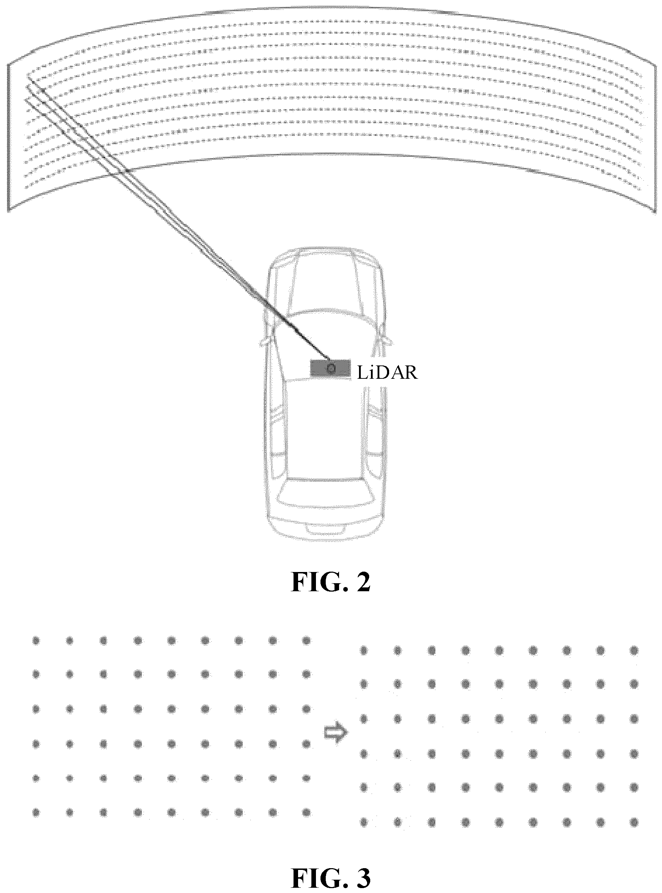

With reference to Fig. 2, a schematic diagram of a scanning field of view after the LiDAR shown in Fig. 1 is installed on a vehicle is shown.

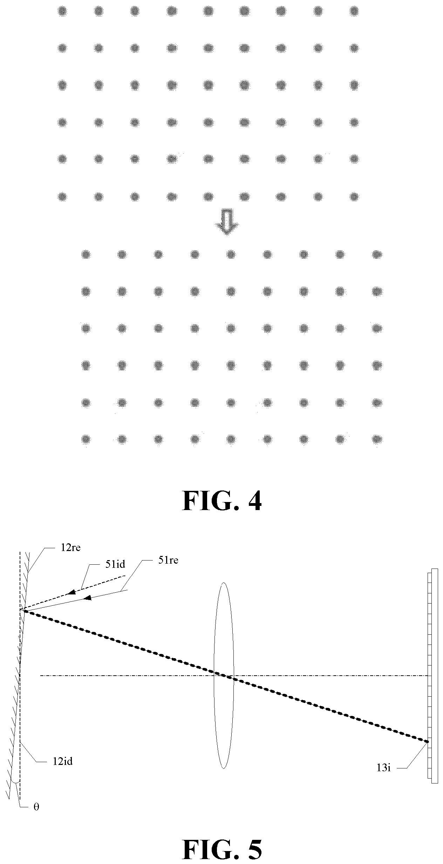

Particularly, when a scanner apparatus 12 includes multiple reflection surfaces 12r, the control precision of position and orientation of the reflection surfaces 12r is relatively low, and it is difficult to maintain position and orientation consistency among the multiple reflection surfaces 12r, which can cause inconsistent fields of view corresponding to the multiple reflection surfaces 12r, thereby resulting in inconsistent beam angles of the LiDAR among the multiple reflection surfaces 12r, and resulting in a problem of point cloud jitter. As shown in Figs. 3 and 4, Fig. 3 shows point cloud jitter along a vertical direction caused by a rotating mirror in the LiDAR shown in Fig. 1; and Fig. 4 shows point cloud jitter along a horizontal direction caused by a rotating mirror in the LiDAR shown in Fig. 1.

With reference to Fig. 5, a principle diagram of a light path for changes of a receiving field of view caused by a rotating mirror in the LiDAR shown in Fig. 1 is shown.

Fig. 5 shows a schematic diagram of a light path in a vertical field of view. The ideal position and orientation 12id of the reflection surface 12r is parallel to the rotation shaft (i.e., without an inclination angle or with an inclination angle of 0°), while there is θ° (i.e., an inclination angle of θ°) between the actual position and orientation 12re of the reflection surface 12r and the rotation shaft.

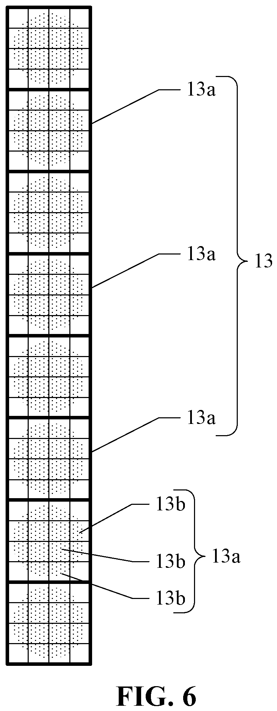

It should be noted that, as shown in Fig. 6, the detector module 13 of the LiDAR includes multiple detector units 13a, and the detector units 13a include multiple detectors 13b. The detector 13b can be a single photon avalanche diode ("SPAD").

As shown in Fig. 5, when the reflection surface 12r is in the ideal position and orientation 12id, echo light received by an i-th detector unit 13i is echo light 51id in a field of view direction of the i-th channel (e.g., a light path as shown by the dotted line 51id in Fig. 5); however, when the reflection surface 12r is in the actual position and orientation 12re, echo light received by the i-th detector unit is echo light 51re (as shown by the solid line 51re in Fig. 5) from a different field of view direction than originally intended (i.e.,, when 12r is in the ideal position and orientation 12id), and in such a case, a same detector unit corresponds to different fields of view when the reflection surface 12r is in different position and orientations, there is detection angle jitter among different position and orientations of the reflection surface.

Moreover, there is the angle θ° between the actual position and orientation 12re and the ideal position and orientation 12id of the reflection surface 12r, that is, when the inclination angle is θ°, in the vertical field of view, a deflection angle of the echo light is $2*\theta°$. For example, when there is an angle of 0.1° between the actual position and orientation 12re and the ideal position and orientation 12id of a reflecting mirror, a vertical field of view angle of the echo light received by the same detector unit shifts by 0.2°, meaning the field of view direction changes by $2*\theta°$, that is, there is an angle of $2*\theta°$ between the echo light 51id and the echo light 51re.

It can be seen that when position and orientations of the multiple reflection surfaces 12r in the scanner apparatus 12 are inconsistent, and the inclination angles between the actual position and orientations 12re and the ideal position and orientations 12id of different reflection surfaces 12r are different, the field of view direction of the echo light received by the same detector unit 13a (as shown in Fig. 6) changes with the scanning process and variation of the reflection surface 12r. Each of the reflection surfaces corresponds to a complete traversal of the field of view, so that point cloud jitter occurs between different reflection surfaces.

Typically, during the integration and assembly of the LiDAR, the inclination angle of the reflection surface 12r in the scanner apparatus is actively adjusted to achieve the highest consistency among the inclination angles of the multiple reflection surfaces 12r. As shown in Fig. 1, for a LiDAR with a double-sided rotating mirror, a rotation shaft direction of the double-sided rotating mirror is changed to cause inclination angles of two reflection surfaces 12r of the double-sided rotating mirror to be the same. After the assembly of the LiDAR is completed, inclination angles of multiple rotating mirrors are measured by measurement and calibration. The inclination angles of multiple rotating mirrors are used as calibrated compensation values to compensate for angle information of the received echo light, thereby determining a correct point cloud image. In this case, point clouds outputted in the presence of the inclination angles are as shown in Figs. 3 and 4.

To solve the technical problems, this disclosure provides a detection method of a LiDAR. The LiDAR includes a scanner module, the scanner module includes: at least one reflection surface; and the detection method includes: determining multiple corrective detector units based on a pre-stored inclination angle of a surface to be corrected, the surface to be corrected being one of the at least one reflection surface; and performing signal collection by the multiple corrective detector units to determine a point cloud image.

In the technical solutions of this disclosure, the multiple corrective detector units are determined based on the inclination angle of the surface to be corrected. The determination of the corrective detector units can compensate for the inclination angle of the surface to be corrected to ensure that the determined corrective detector unit corresponds to a fixed field of view direction. Particularly when the scanner module includes multiple reflection surfaces, different corrective detector units are determined based on respective inclination angles of the multiple reflection surfaces, to ensure that each of the reflection surfaces corresponds to a fixed field of view direction based on the determined corrective detector unit, causing inhibition of the occurrence of point cloud jitter among the multiple reflective surfaces.

To make the objects, features, and advantages of this disclosure more obvious and understandable, some embodiments of this disclosure are described in detail below with reference to the drawings.

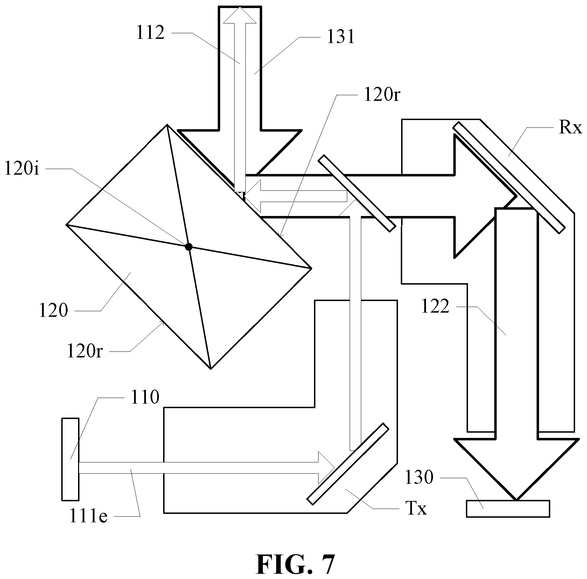

With reference to Fig. 7, a schematic structural diagram of an embodiment of a LiDAR of this disclosure is shown.

The LiDAR includes: a light-emitter module 110, a scanner module 120, and a detector module 130.

The light-emitter module 110 is configured to generate detection light 111e. The detection light 111e generated by the light-emitter module 110 is projected onto a transmission optical module Tx, and the detection light transmitted by the transmission optical module Tx is projected onto the scanner module 120.

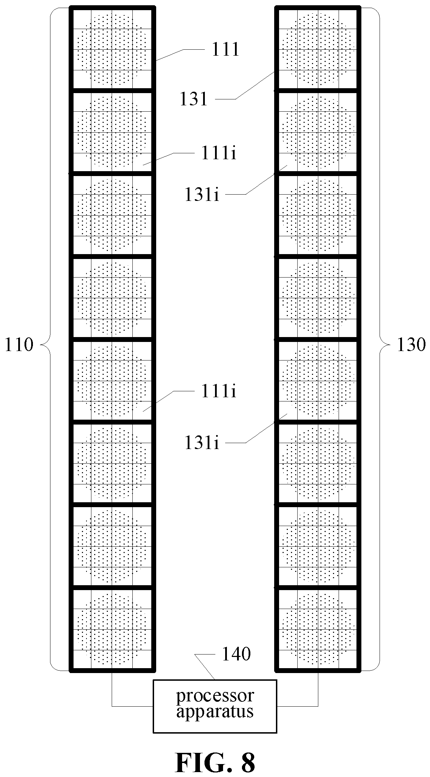

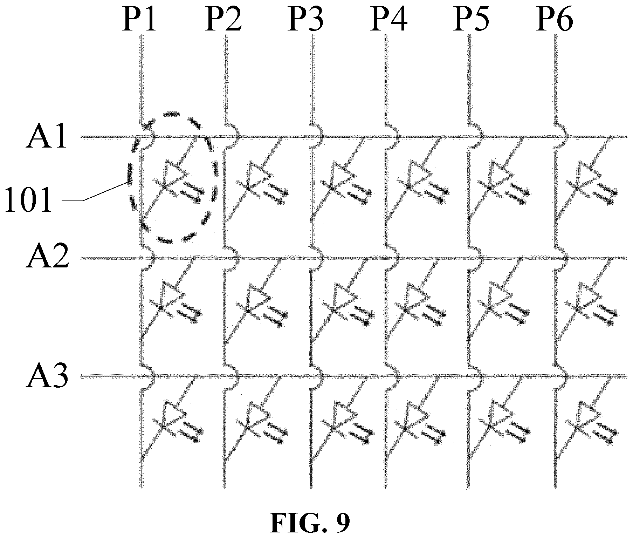

As shown in Fig. 8, in some embodiments of this disclosure, the light-emitter module 110 of the LiDAR includes: multiple emitters 111i. Specifically, the emitter 111i is an independently addressable and independently controlled laser (as shown by circle 101 in Fig. 9).

Specifically, as shown in Figs. 8 and 9, the multiple emitters 111i are arranged in an array to form an emission array. By applying different voltages to connection wires of A1 to A3 and P1 to P6, different emitters 111 can be selected, achieving independent addressing and independent control of the emitters 111i. Specifically, in some embodiments of this disclosure, the emitters 111i include: a vertical cavity surface emitting laser ("VCSEL").

The scanner module 120 is configured to change an emission angle of the detection light 111e. The scanner module 120 includes at least one reflection surface 120r. The reflection surface 120r reflects the detection light 111e, causing the detection light 111e to be emitted into an external space of the LiDAR.

In some embodiments of this disclosure, the scanner module 120 includes a rotation shaft 120i; and the reflection surface 120r rotates around the rotation shaft 120i, that is, the at least one reflection surface 120r rotates around the rotation shaft 120i. Specifically, in the embodiment as shown in Fig. 7, the scanner module 120 includes: a rotating mirror, the reflection surface 120r is a mirror surface of the rotating mirror; and a rotation shaft of the rotating mirror is the rotation shaft 120i.

As shown in Fig. 7, the rotating mirror is a double-sided rotating mirror, that is, the scanner module 120 includes 2 reflection surfaces 120r, and the 2 reflection surfaces 120r rotate around the rotation shaft 120i.

After emitted into the external space of the LiDAR, the emitted detection light 112 forms echo light 131 after reflected by a target to be measured. The echo light 131 is received and reflected by a same reflection surface 120r in the scanner module 120, then projected onto the receiving optical module Rx, transmitted by the receiving optical module Rx, and then projected onto the detector module 130.

The detector module 130 of the LiDAR is configured to receive echo light 122 transmitted by the receiving optical module Rx to achieve detection.

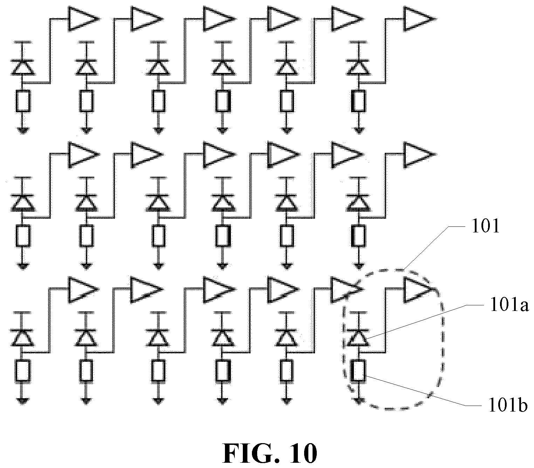

As shown in Figs. 8 and 10, the detector module 130 includes multiple detectors 131i. Specifically, the detector 131i is an independently addressable and independently controlled detector (as shown by circle 101 in Fig. 10).

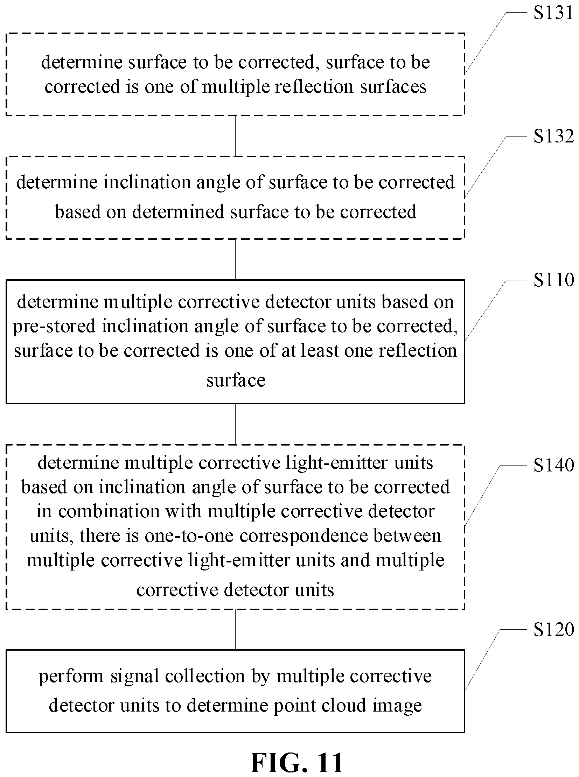

Specifically, the multiple detectors 131i are arranged in an array to form a receiving array. Each of the detectors 131i can be independently powered on and independently read out. By powering on or reading only a detector on a specific address wire, a signal of the single detector can be read. Specifically, in some embodiments of this disclosure, the detector 131i includes a single photon avalanche diode. The circle 101 in Fig. 11 is a unit of the detector 131i, including a single photon avalanche diode 101a and a quenching resistor 101b.

It should be noted that, as shown in Fig. 8, the light-emitter module 110 includes multiple light-emitter units 111, each of the light-emitter units 111 includes two or more of the emitters 111i; the detector module 130 includes multiple detector units 131, and each of the detector units 131 includes two or more of the detectors 131i. After the LiDAR is calibrated, there is a one-to-one correspondence between the multiple light-emitter units 111 and the multiple detector units 131, that is, an emission field of view of the light-emitter unit 111 in a far field is the same as a receiving field of view of a corresponding detector unit 131 in the far field, to form a physical channel. That is to say, in the far field, the field of view of the light-emitter unit 111 is the same as the field of view of the corresponding detector unit 131. In such a case, echo light formed by reflection of the detection light emitted from the light-emitter unit 111 is received by the corresponding detector unit 131, that is, each physical channel has a fixed field of view direction of the channel, for example, 40° from a vertical field of view direction.

It should be further noted that the implementation of the light-emitter unit 111 including multiple emitters is only an example. In other embodiments of this disclosure, the light-emitter unit 111 can further be an independent laser, such as an edge-emitting laser ("EEL").

Further with reference to Fig. 8, the LiDAR further includes: a processor apparatus 140. The processor apparatus can implement the detection method of this disclosure to compensate for the inclination angle of the reflection surface in the scanner module.

With reference to Fig. 11, a schematic flow chart of a detection method implemented by the processor apparatus in the LiDAR embodiment shown in Fig. 8.

The detection method includes: performing step S110: determining multiple corrective detector units based on a pre-stored inclination angle of a surface to be corrected, the surface to be corrected being one of the at least one reflection surface; and performing step S120: performing signal collection by the multiple corrective detector units to determine a point cloud image.

Because the multiple corrective detector units are determined based on the inclination angle of the surface to be corrected, the determination of the corrective detector units can compensate for the inclination angle of the surface to be corrected to ensure that the determined corrective detector unit corresponds to a fixed field of view direction. Particularly when the scanner module includes multiple reflection surfaces, different corrective detector units are determined based on respective inclination angles of the multiple reflection surfaces, to ensure that each of the reflection surfaces corresponds to a fixed field of view direction based on the determined corrective detector unit, causing inhibition of the occurrence of point cloud jitter among the multiple reflective surfaces.

As shown in Figs. 7 and 11, step S110 is first performed: determining multiple corrective detector units based on a pre-stored inclination angle of a surface to be corrected. The surface to be corrected is one of the at least one reflection surface 120r (as shown in Fig. 8).

The step of determining the corrective detector units is configured to compensate for the inclination angle of the surface to be corrected using positions of the corrective detector units.

As shown in Fig. 7, in some embodiments of this disclosure, the scanner module 120 includes multiple reflection surfaces 120r. In such a case, as shown in Fig. 11, the detection method further includes: performing step S131: determining the surface to be corrected, the surface to be corrected being one of the multiple reflection surfaces, before performing step S110: determining the multiple corrective detector units.

Specifically, the scanner apparatus 120 includes a rotating mirror, the rotating mirror is an n-sided rotating mirror, and the reflection surface is a mirror surface of the rotating mirror, that is, the scanner apparatus 120 includes n reflection surfaces. In such a case, the step S131 of determining the surface to be corrected is performed, in which the surface to be corrected is one of n mirror surfaces of the n-sided rotating mirror. In the embodiment as shown in Fig. 7, the scanner module 120 includes 2 reflection surfaces 120r, and the surface to be corrected is one of 2 mirror surfaces of the double-sided rotating mirror.

After the surface to be corrected is determined, the step S132 is performed: determining the inclination angle of the surface to be corrected based on the determined surface to be corrected.

The LiDAR pre-stores the inclination angle of the at least one reflection surface. When there are multiple reflection surfaces, the LiDAR pre-stores inclination angles of the multiple reflection surfaces, and there is a one-to-one correspondence between the inclination angles of the multiple reflection surfaces and the multiple reflection surfaces.

It should be noted that the inclination angle of the surface to be corrected represents an angle between an actual position and orientation and an ideal position and orientation of the surface to be corrected. The ideal position and orientation of the surface to be corrected is a position and orientation of the reflection surface in design requirements of the scanner module 120; and the actual position and orientation of the surface to be corrected is a position and orientation of the reflection surface after the scanner module 120 has been manufactured and assembled.

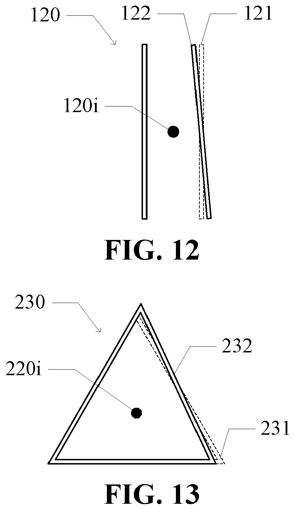

Specifically, as shown in Fig. 12, the scanner module 120 includes 2 reflection surfaces. In the design requirements, ideal position and orientations 121 of the 2 reflection surfaces of the scanner module 120 are parallel to each other, and are parallel to the rotation shaft 120i (as shown by the dotted line in Fig. 12); and after actual manufacture and assembly are completed, an actual position and orientation 122 of one of the reflection surfaces deviates from the ideal position and orientation 121 (as shown by the solid line in Fig. 12).

As shown in Fig. 13, in some other embodiments of this disclosure, the scanner apparatus 230 includes 3 reflection surfaces. In the design requirements, ideal position and orientations 231 of the 3 reflection surfaces of the scanner module 230 form a triangular prism with a cross section being an equilateral triangle, the rotation shaft 220i is located at a position of a connection line of a bottom center of the triangular prism; and after the actual manufacture and assembly are completed, an actual position 232 of 1 of the reflection surfaces deviates from the ideal position and orientation 121 (as shown by the solid line in Fig. 13).

It should be noted that Figs. 12 and 13 only illustrate the deviation of one reflection surface among the multiple reflection surfaces of the scanner apparatus from its ideal position. However, the number of reflection surfaces deviating from the ideal position is not limited in this disclosure. In some other embodiments of this disclosure, among the multiple reflection surfaces of the scanner apparatus, more reflection surfaces may deviate from ideal positions thereof.

In addition, in some embodiments of this disclosure, the inclination angle of the surface to be corrected includes: a vertical inclination angle $\theta$ and a horizontal inclination angle $\varphi$. The vertical inclination angle $\theta$, that is, a pitch angle, of the surface to be corrected represents an angle of projection of an angle between an actual position and orientation and an ideal position and orientation of the reflection surface in a plane of the rotation shaft; and the horizontal inclination angle $\varphi$, that is, a horizontal offset angle, of the surface to be corrected represents an angle of projection of an angle between an actual position and orientation and an ideal position and orientation of the reflection surface in a plane perpendicular to the rotation shaft.

The LiDAR pre-stores at least one group of inclination angles, each group of inclination angles includes a vertical inclination angle $\theta$ and a horizontal inclination angle $\phi$ corresponding to a same reflection surface in the scanner module 120. That is to say, the LiDAR pre-stores n groups of inclination angles: $(\theta_1, \varphi_1)$, $(\theta_2, \varphi_2)$, ..., $(\theta_n, \varphi_n)$. There is a one-to-one correspondence between the n groups of inclination angles and the n mirror surfaces of the scanner module 120.

It should be noted that the at least one group of inclination angles pre-stored in the LiDAR can be determined in a calibration process of the LiDAR. That is to say, in some embodiments of this disclosure, the calibration process of the LiDAR includes: measuring an inclination angle of at least one reflection surface in the scanner module 120.

In such a case, the step S132 of determining the inclination angle of the surface to be corrected based on the determined surface to be corrected is performed, in which the inclination angle of the surface to be corrected is determined based on a reflection surface as the surface to be corrected. Specifically, the surface to be corrected is an i-th reflection surface of the scanner module 120, that is, an i-th mirror surface of the n-sided rotating mirror (i is an integer greater than or equal to 1 and less than or equal to n), and the inclination angle is an i-th group of inclination angles, $(\theta_i, \varphi_i)$.

Further with reference to Fig. 11, after the inclination angle of the surface to be corrected is determined, the step S110 is performed: determining multiple corrective detector units 131.

In some embodiments of this disclosure, the scanner module includes multiple reflection surfaces, and the surface to be corrected is one of the multiple reflection surfaces. In such a case, the step S110 of determining the multiple corrective detector units is performed, in which the multiple corrective detector units are determined based on the determined inclination angle of the surface to be corrected, and the multiple corrective detector units correspond to the determined surface to be corrected.

In addition, as shown in Figs. 8 and 10, the detector module 130 of the LiDAR includes multiple detectors 131i. In such a case, each of the corrective detector units includes two or more of the detectors 131i.

Using the electronic aperture function of the detector array formed by multiple detectors 131i, wherein the detectors 131i are independently addressable and independently controllable for readout, the photosensitive region corresponding to a channel can be changed through electrical control. Before each reception of the echo light, the photosensitive region (region of interest, "ROI") is changed to shift, to compensate for the inclination angle of the corresponding surface to be corrected. This ensures that each corresponding corrective detector unit receives echo light in a fixed channel field of view direction. For example, a field of view direction of an i-th channel corresponds to a vertical field of view direction of 40°, when a surface to be corrected 1 is at a first inclination angle, a readout data of a first corrective detector unit is used, and when a surface to be corrected 2 in a second inclination angle, a readout data of a second corrective detector unit is used, to ensure that both of the 2 corrective detector units corresponds to a vertical field of view direction of 40°, causing a receiving field of view of the LiDAR to remain stable at a fixed angle, and avoiding or decreasing detection angle fluctuation among the multiple reflection surfaces.

Specifically, as mentioned, the inclination angle of the surface to be corrected includes: the vertical inclination angle $\theta$ and the horizontal inclination angle $\varphi$. The step S110 of determining the multiple corrective detector units is performed, in which the multiple corrective detector units are determined based on the vertical inclination angle $\theta$ and the horizontal inclination angle $\varphi$.

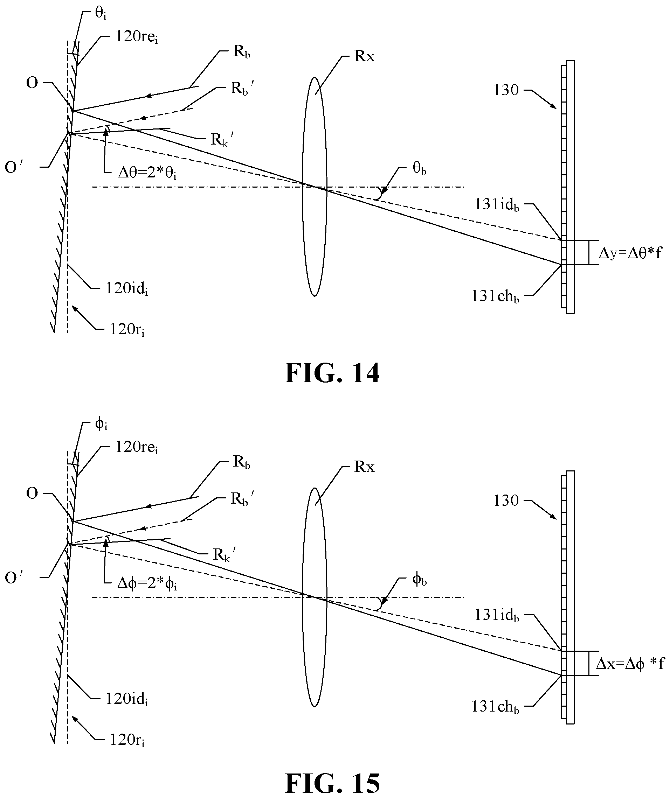

With reference to Fig. 14, a schematic diagram of a light path in a vertical field of view of a detection method implemented by the processor apparatus in the embodiment of the LiDAR shown in Fig. 8is shown.

Both emitted detection light and received echo light are reflected by the surface to be corrected $120r_i$, and the surface to be corrected $120r_i$ has an inclination angle, that is, there is an angle $\theta_i$ between an ideal position and orientation 120id; and an actual position and orientation 120re; of the surface to be corrected $120r_i$. A position of a reflection point of echo light in a field of view direction of a b-th channel (as shown by solid arrow $R_b$ and dotted arrow $R_b$' in the figure, where the solid arrow $R_b$ and the dotted arrow $R_b$' are parallel to each other, $R_b$ shows echo light projected at the actual position and orientation 120rei, and $R_b$' shows echo light projected at the ideal position and orientation 120idi) offsets on the surface to be corrected $120r_i$ (offset from point O' at the ideal position and orientation 120id; to point O at the actual position and orientation 120re;). In this case, an ideal detector unit $131id_b$ cannot receive the echo light in the field of view direction of the b-th channel. In this case, the ideal detector unit $131id_b$ actually receives echo light in a field of view direction $R_k$', there is an angle $\Delta\theta=2^*\theta_i$ between the $R_k$' and $R_b$'. The echo light in the field of view direction of the b-th channel is received by a corrective detector unit $130ch_b$.

Specifically, Fig. 14 shows a schematic light path in a vertical field of view.

The detector module 130 is located at a focal plane position of the optical receiving assembly Rx. In such a case, prior to compensation, an ordinate of a center position of a b-th ideal detector unit $131id_b$ is $y_b$, b is the channel number, and a vertical field angle of a field of view of the b-th channel corresponding to the b-th ideal detector unit $131id_b$ is $\theta_b$, that is, a vertical field angle of detection light emission corresponding to the echo light received by a b-th detector unit is:

$$\theta_b=\frac{y_b}{f},$$

f is the focal length of the optical receiving assembly Rx.

The LiDAR pre-stores n groups of inclination angles with one-to-one correspondence between the n reflection surfaces in the scanner module 120 and the n groups of inclination angles, and vertical inclination angles of the n reflection surfaces are $\theta_1$, $\theta_2$, ..., $\theta_n$, respectively. The vertical inclination angle corresponding to the surface to be corrected $120r_i$ is $\theta_i$. Both the emitted detection light and the received echo light are reflected by the surface to be corrected 120n. In such a case, an offset angle in a vertical direction of reflected light formed by reflection of echo light $R_b$ in the field of view direction of the b-th channel from the surface to be corrected 120n is $\Delta\theta=2^*\theta_i$, that is, a position of a light spot formed by the reflected light on the detector module 130 is translated by $\Delta y=\Delta\theta^*f$ along a corresponding direction. In such a case, the step S110 of determining the multiple corrective detector units based on the determined inclination angle of the surface to be corrected is performed, in which the difference $\Delta y$ between an ordinate of a center position of the determined b-th corrective detector unit $130ch_b$ and an ordinate of a center position of the b-th detector unit is determined. Moreover, a direction in which the center position of the b-th corrective detector unit points to the center position of the b-th detector unit is opposite to an offset direction of a reflection point position of the surface to be corrected 120n.

It can be seen that, the step S110 of determining the multiple corrective detector units is performed, in which based on the inclination angle of the surface to be corrected, the determined corrective detector units reversely translate the photosensitive region in the detector module 130 by $\Delta y$. In such a case, for the b-th corrective detector unit $131ch_b$, a vertical field angle of detection light corresponding to the received echo light is

$$\theta_b' = \frac{(y_b+\Delta y)}{f} + \Delta\theta = \theta_b$$ , that is, equal to a corresponding field angle when the surface to be corrected $120r_i$ does not have an inclination angle (vertical inclination angle $\theta_i=0$).

With reference to Fig. 15, a schematic diagram of a light path in a horizontal field of view of a detection method implemented by the processor apparatus in the embodiment of the LiDAR shown in Fig. 8 is shown.

The compensation principle in the horizontal field of view is similar to the compensation principle in the vertical field of view.

Specifically, Fig. 15 shows a schematic light path in the horizontal field of view.

Prior to compensation, an abscissa of a center position of the b-th ideal detector unit $131id_b$ is $x_b$, b is the channel number, A horizontal field angle of a field of view of the b-th channel corresponding to the b-th ideal detector unit $131id_b$ is $\varphi_b$, that is, a horizontal field angle of detection light emission corresponding to the echo light received by the b-th detector unit is:

$$\phi_b=\frac{x_b}{f},$$

f is the focal length of the optical receiving assembly Rx.

The LiDAR pre-stores n groups of inclination angles with one-to-one correspondence between the n reflection surfaces in the scanner module 120 and the n groups of inclination angles, and horizontal inclination angles of the n reflection surfaces are $\varphi_1$, $\varphi_2$, ..., $\varphi_n$, respectively. The horizontal inclination angle corresponding to the surface to be corrected $120r_i$ is $\varphi_i$. Both the emitted detection light and the received echo light are reflected by the surface to be corrected $120r_i$. In such a case, an offset angle in a horizontal direction of reflected light formed by reflection of the echo light $R_b$ in the field of view direction of the b-th channel from the surface to be corrected $120r_i$ is $\Delta\varphi=2^*\varphi_i$, that is, a position of the light spot formed by the reflected light on the detector module 130 is translated by $\Delta x=\Delta\varphi^*f$ along a corresponding direction. In such a case, the step S110 of determining the multiple corrective detector units based on the determined inclination angle of the surface to be corrected is performed, in which a difference $\Delta x$ between an abscissa of the center position of the b-th corrective detector unit $130ch_b$ and an abscissa of the center position of the b-th detector unit is determined. Moreover, a direction in which the center position of the b-th corrective detector unit points to the center position of the b-th detector unit is opposite to an offset direction of a reflection point position of the surface to be corrected 120n.

It can be seen that, the step S110 of determining the multiple corrective detector units is performed, in which based on the inclination angle of the surface to be corrected, the determined corrective detector unit reversely translate the region of interest in the detector module 130 by $\Delta x$. In such a case, for the b-th corrective detector unit $131ch_b$, a horizontal field angle of detection light emission corresponding to the received echo light is

$$\phi_b' = \frac{(x_b + \Delta x)}{f} + \Delta\phi = \phi_b$$

, that is, equal to a corresponding field angle when the surface to be corrected $120r_i$ does not have an inclination angle (horizontal inclination angle $\varphi_i = 0$).

In such a case, the determination of the corrective detector unit can compensate for the inclination angle of the surface to be corrected, to ensure that the determined corrective detector unit corresponds to a fixed field of view direction. Particularly when the scanner module includes multiple reflection surfaces, different corrective detector units are determined based on respective inclination angles of the multiple reflection surfaces, to ensure that each of the reflection surfaces corresponds to a fixed field of view direction based on the determined corrective detector unit, causing inhibition of the occurrence of point cloud jitter among the multiple reflective surfaces.

It should be noted that the ideal detector unit, such as the b-th ideal detector unit $131id_b$ in Figs. 14 and 15, is a detector unit prior to compensation, that is, the detector unit 131 determined by calibration of the LiDAR in Fig. 8. The ideal detector unit includes two or more of the detectors, and the two or more detectors in the ideal detector unit are at least partially different from multiple detectors in the corrective detector unit.

It should be further noted that, as mentioned, in some embodiments of this disclosure, the detector module 130 includes multiple detectors 131i that are independently powered on and independently read out. In such a case, a receiving region of a receiving array can be changed by powering only a detector on a specific address wire or reading only a signal of a detector on a specific address wire, to achieve the purpose of maintaining a stable field of view.

Further with reference to Figs. 8 and 11, in some embodiments of this disclosure, the light-emitter module 110 of the LiDAR includes multiple independently addressable and independently controlled lasers. In such a case, the detection method further includes: after performing the step S110: determining the multiple corrective detector units, performing S140: determining multiple corrective light-emitter units based on the inclination angle of the surface to be corrected in combination with the multiple corrective detector units, there being one-to-one correspondence between the multiple corrective light-emitter units and the multiple corrective detector units.

The one-to-one correspondence between the multiple corrective light-emitter units and the multiple corrective detector units means that a corrective light-emitter unit and a corresponding corrective detector unit have a same field of view angle in a far field, that is, in the far field, an emission field of view angle of the corrective light-emitter unit is the same as a receiving field of view angle of the corresponding corrective detector unit. Specifically, different voltages are applied to connection wires of the emission array, to select different emitters to emit light.

It should be noted that a light emitter module 110 of the LiDAR includes multiple emitters. In such a case, each of the corrective light-emitter units includes two or more of the emitters. Based on the determination of the corrective light-emitter unit, the receiving field of view angle of the corrective detector unit is the same as the emission field of view angle of the corrective light-emitter unit, to ensure the ranging capacity and the detection efficiency of the LiDAR.

Further with reference to Fig. 11, after the corrective detector unit and the corrective light-emitter unit are determined, the detection method further includes: performing the step S120: performing signal collection by the multiple corrective detector units to determine the point cloud image.

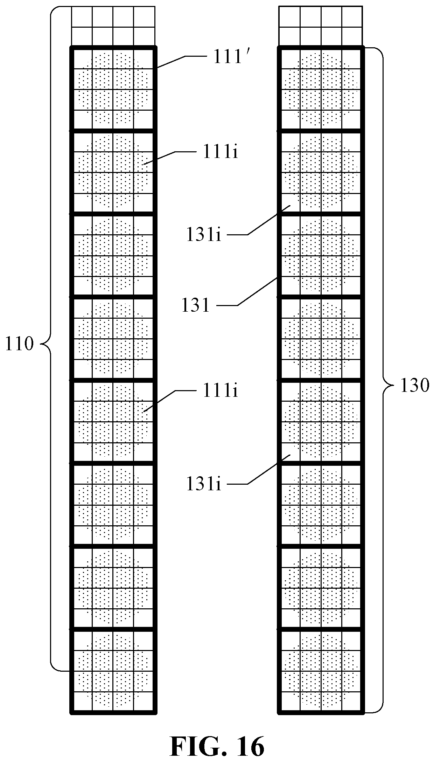

With reference to Figs. 7 and 16, the step S120 of performing signal collection by the multiple corrective detector units 131 to determine the point cloud image is performed, including: first enabling the multiple corrective light-emitter units 111' to generate detection light, the detection light forming corresponding echo light after reflected by an object outside the LiDAR; and receiving the echo light by a corresponding corrective detector unit 131 to collect signal.

Specifically, the detection light is emitted after reflected by the surface to be corrected; the emitted detection light forms echo light after reflected by an object outside the LiDAR; and the echo light is reflected by the surface to be corrected to the multiple corrective detector units. The surface to be corrected is one of the multiple reflection surfaces of the scanner apparatus.

Because the corrective detector unit 131 is determined prior to signal collection, and the corrective detector unit 131 is determined based on the inclination angle of the surface to be corrected, that is, positions of the corrective detector unit 131 has been changed to compensate for the deflection caused by the inclination angle of the surface to be corrected, thereby achieving the effects of maintaining a stable field of view.

In addition, with reference to Fig. 16, a schematic diagram of implementing signal collection by the corrective light-emitter units 111' and the corrective detector unit 131 in the embodiment of the LiDAR shown in Fig. 8is shown.

The corrective light-emitter unit 111' is determined based on the inclination angle of the surface to be corrected and the corrective detector unit 131. In such a case, when a signal is emitted or received, the light spot on the receiving array is still located at a center position of the corrective detector unit 131, that is, the corrective detector unit can receive all energy of an echo light spot in a field of view direction of a corresponding channel (the circle in the figure represents the light spot), to improve the detection efficiency and the ranging capacity.

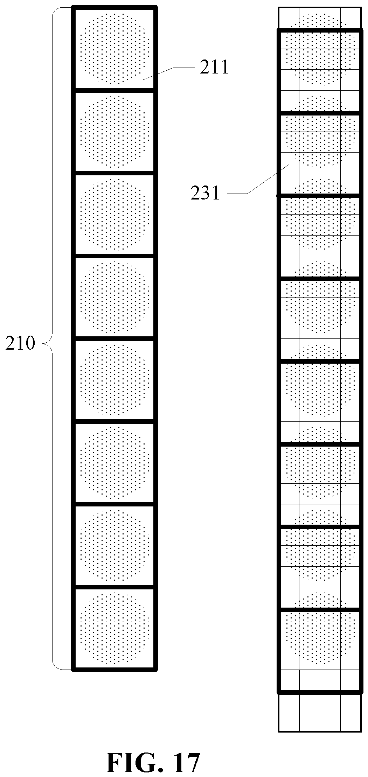

It should be noted that, in other embodiments of this disclosure, as shown in Fig. 17, the LiDAR includes a light-emitter module, the light-emitter module 210 includes: multiple light-emitter units 211, and there is a one-to-one correspondence between the multiple light-emitter units 211 and the multiple corrective detector units 231; the step S120 of performing signal collection by the multiple corrective detector units 231 is performed, including: enabling the multiple light-emitter units 211 to generate detection light, the detection light forming corresponding echo light after reflected by an object outside the LiDAR; and receiving the echo light by a corresponding corrective detector unit 231 to collect signal.

Accordingly, this disclosure further provides a LiDAR.

With reference to Fig. 7, a schematic structural diagram of an embodiment of a LiDAR of this disclosure is shown.

The LiDAR includes: a light-emitter module 110 and a detector module 130.

The light-emitter module 110 is configured to generate detection light 111e. The detection light 111e generated by the light-emitter module 110 is projected onto a transmission optical module Tx, and the detection light transmitted by the transmission optical module Tx is projected onto the scanner module 120.

As shown in Fig. 8, in some embodiments of this disclosure, the light-emitter module 110 of the LiDAR includes: multiple emitters 111i. Specifically, the emitter 111i is an independently addressable and independently controlled laser (as shown by circle 101 in Fig. 9).

Specifically, as shown in Figs. 8 and 9, the multiple emitters 111 are arranged in an array to form an emission array. By applying different voltages to connection wires of A1 to A3 and P1 to P6, different emitters 111 are selected, achieving independent addressing and independent control of the emitters 111i. Specifically, in some embodiments of this disclosure, the emitters 111i include: a vertical cavity surface emitting laser ("VCSEL").

The detector module 130 is configured to receive echo light 122 transmitted by the receiving optical module Rx to achieve detection.

As shown in Figs. 8 and 10, the detector module 130 includes multiple detectors 131i. Specifically, the detector 131i is an independently addressable and independently controlled detector (as shown by circle 101 in Fig. 10).

Specifically, the multiple detectors 131i are arranged in an array to form a receiving array. Each of the detectors 131i can be independently powered on and independently read out. By powering on or reading only a detector on a specific address wire, a signal of the single detector can be read. Specifically, in some embodiments of this disclosure, the detector 131i includes a single photon avalanche diode. The circle 101 in Fig. 11 is a unit of the detector 131i, including a single photon avalanche diode 101a and a quenching resistor 101b.

It should be noted that the light-emitter module 110 includes multiple light-emitter units, each of the light-emitter units includes two or more of the emitters 111i; the detector module 130 includes multiple detector units, and each of the detector units includes two or more of the detectors 131i. After the LiDAR is calibrated, there is a one-to-one correspondence between the multiple light-emitter units and the multiple light-emitter units, that is, an emission field of view of the light-emitter unit in a far field is the same as a receiving field of view of a corresponding detector unit in a far field to form a physical channel. That is to say, at a far-field position, the field of view of the light-emitter unit is the same as the field of view of the corresponding detector unit. In such a case, echo light formed by reflection of the detection light emitted from the light-emitter unit is received by a corresponding receiving unit, that is, each physical channel has a fixed field of view direction of the channel.

It should be further noted that the implementation of the light-emitter unit including multiple emitters is only an example. In other embodiments of this disclosure, the light-emitter unit can further be an independent laser, such as an edge-emitting laser ("EEL").

Further with reference to Fig. 7, the LiDAR further includes: a scanner module 120.

The scanner module 120 is configured to change an emission angle of the detection light 111e. The scanner module 120 includes at least one reflection surface 120r. The reflection surface 120r reflects the detection light 111e, causing the detection light 111e to be emitted into an external space of the LiDAR.

In some embodiments of this disclosure, the scanner module 120 includes a rotation shaft 120i; and the reflection surface 120r rotates around the rotation shaft 120i, that is, the at least one reflection surface 120r rotates around the rotation shaft 120i. Specifically, in the embodiment as shown in Fig. 7, the scanner module 120 includes: a rotating mirror, the reflection surface 120r is a mirror surface of the rotating mirror; and a rotation shaft of the rotating mirror is the rotation shaft 120i.

As shown in Fig. 7, the rotating mirror is a double-sided rotating mirror, that is, the scanner module 120 includes 2 reflection surfaces 120r, and the 2 reflection surfaces 120r rotate around the rotation shaft 120i.

After emitted into the external space of the LiDAR, the emitted detection light 112 forms echo light 131 after reflected by a target to be measured. The echo light 131 is received and reflected by a same reflection surface 120r in the scanner module 120, then projected onto the receiving optical module Rx, transmitted by the receiving optical module Rx, and then projected onto the detector module 130.

Further with reference to Fig. 8, the LiDAR further includes: a processor apparatus 140, the processor apparatus 140 is connected to both the light-emitter module 110 and the detector module 130, and the processor apparatus 140 is configured to control the light-emitter module 110 and the detector module 130 to perform signal collection, to determine the point cloud image.

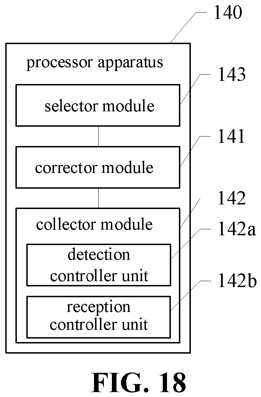

With reference to Fig. 18, a functional block diagram of the processor apparatus in the embodiment of the LiDAR shown in Fig. 8 is shown.

The processor apparatus 140 includes: a corrector module 141, the corrector module 141 pre-storing an inclination angle of a surface to be corrected, the corrector module 141 is configured to determine multiple corrective detector units based on the inclination angle of the surface to be corrected, the surface to be corrected being one of the at least one reflection surface; and a collector module 142, the collector module 142 is configured to perform signal collection by the multiple corrective detector units to determine a point cloud image.

The corrector module 141 is configured to compensate for the inclination angle of the surface to be corrected using a position of the corrective detector unit.

As shown in Fig. 7, in some embodiments of this disclosure, the scanner module 120 includes multiple reflection surfaces 120r. In such a case, as shown in Fig. 18, the processor apparatus 140 further includes: a selector module 143. The selector module 143 is configured to determine the surface to be corrected. The surface to be corrected is one of the multiple reflection surfaces.

Specifically, the scanner apparatus 120 includes a rotating mirror, the rotating mirror is an n-sided rotating mirror, and the reflection surface is a mirror surface of the rotating mirror, that is, the scanner apparatus 120 includes n reflection surfaces.

In such a case, the selector module 143 selects one mirror surface from n mirror surfaces of the n-sided rotating mirror as the surface to be corrected, that is, the surface to be corrected is one of the n mirror surfaces of the n-sided rotating mirror. In the embodiment as shown in Fig. 7, the scanner module 120 includes 2 reflection surfaces 120r, and the selector module 143 selects one mirror surface from 2 mirror surfaces of the double-sided rotating mirror as the surface to be corrected, that is, the surface to be corrected is one of the 2 mirror surfaces of the double-sided rotating mirror.

The corrector module 141 determines the inclination angle of the surface to be corrected based on the surface to be corrected determined by the selector module 143.

The corrector module 141 pre-stores the inclination angle of the at least one reflection surface in the scanner module 120. When there are multiple reflection surfaces, the LiDAR pre-stores inclination angles of the multiple reflection surfaces, and there is a one-to-one correspondence between the inclination angles of the multiple reflection surfaces and the multiple reflection surfaces.

It should be noted that the inclination angle of the surface to be corrected represents an angle between an actual position and orientation and an ideal position and orientation of the surface to be corrected. The ideal position and orientation of the surface to be corrected is a position and orientation of one of the reflection surfaces in design requirements of the scanner module 120; and the actual position and orientation of the surface to be corrected is a position and orientation of the reflection surface after the manufacture and assembly of the scanner module 120 are completed.

Specifically, as shown in Fig. 12, the scanner module 120 includes 2 reflection surfaces. In the design requirements, ideal position and orientations 121 of the 2 reflection surfaces of the scanner module 120 are parallel to each other, and are parallel to the rotation shaft 120i (as shown by the dotted line in Fig. 12); and after actual manufacture and assembly are completed, an actual position and orientation 122 of one of the reflection surfaces deviates from the ideal position and orientation 121 (as shown by the solid line in Fig. 12).

As shown in Fig. 13, in some other embodiments of this disclosure, the scanner apparatus 230 includes 3 reflection surfaces. In the design requirements, ideal position and orientations 231 of the 3 reflection surfaces of the scanner module 230 form a triangular prism with a cross section being an equilateral triangle, the rotation shaft 220i is located at a position of a connection line of a bottom center of the triangular prism; and after the actual manufacture and assembly are completed, an actual position 232 of 1 of the reflection surfaces deviates from the ideal position and orientation 121 (as shown by the solid line in Fig. 13).

It should be noted that Figs. 12 and 13 only illustrate the deviation of one reflection surface among the multiple reflection surfaces of the scanner apparatus from its ideal position. However, the number of reflection surfaces deviating from the ideal position is not limited in this disclosure. In some other embodiments of this disclosure, among the multiple reflection surfaces of the scanner apparatus, more reflection surfaces may deviate from ideal positions thereof.

In addition, in some embodiments of this disclosure, the inclination angle of the surface to be corrected includes: a vertical inclination angle $\theta$ and a horizontal inclination angle $\varphi$. The vertical inclination angle $\theta$, that is, a pitch angle, of the surface to be corrected represents an angle of projection of an angle between an actual position and orientation and an ideal position and orientation of one of the reflection surfaces in a plane of the rotation shaft; and the horizontal inclination angle $\varphi$, that is, a horizontal offset angle, of the surface to be corrected represents an angle of projection of an angle between an actual position and orientation and an ideal position and orientation of one of the reflection surfaces in a plane perpendicular to the rotation shaft.

The corrector module 141 pre-stores at least one group of inclination angles, each group of inclination angles includes a vertical inclination angle $\theta$ and a horizontal inclination angle $\phi$ corresponding to a same reflection surface in the scanner module 120. That is to say, the LiDAR pre-stores n groups of inclination angles: $(\theta_1, \varphi_1), (\theta_2, \varphi_2), ..., (\theta_n, \varphi_n)$. There is a one-to-one correspondence between the n groups of inclination angles and the n mirror surfaces of the scanner module 120.

It should be noted that the at least one group of inclination angles pre-stored in the corrector module 141 can be determined in a calibration process of the LiDAR. That is to say, in some embodiments of this disclosure, the at least one group of inclination angles pre-stored in the corrector module 141 is measured in the calibration process of the LiDAR.

In such a case, the corrector module 141 reads the at least one group of pre-stored inclination angles, and determines the inclination angle of the surface to be corrected based on the surface to be corrected determined by the selector module 143. Specifically, the surface to be corrected is an i-th reflection surface of the scanner module 120, that is, an i-th mirror surface of the n-sided rotating mirror (i is an integer greater than or equal to 1 and less than or equal to n), and the inclination angle is an i-th group of inclination angles, $(\theta_i, \varphi_i)$.

After determining the inclination angle of the surface to be corrected, the corrector module 141 determines the multiple corrective detector units 131.

In some embodiments of this disclosure, the scanner module 120 includes multiple reflection surfaces, and the surface to be corrected is one of the multiple reflection surfaces. The corrector module 141 determines the multiple corrective detector units based on the determined inclination angle of the surface to be corrected, and the multiple corrective detector units correspond to the determined surface to be corrected.

In addition, as shown in Figs. 8 and 10, the detector module 130 of the LiDAR includes multiple detectors 131i. In such a case, each of the corrective detector units includes two or more of the detectors 131i.

Using the electronic aperture function of the detector array formed by multiple detectors 131i, wherein the detectors 131i are independently addressable and independently controllable for readout, the photosensitive region corresponding to a channel can be changed through electrical control. Before each reception of the echo light, the corrector module 141 changes the photosensitive region (region of interest, "ROI") to shift, to compensate for the inclination angle of the corresponding surface to be corrected. This ensures that each corresponding corrective detector unit receives echo light in a fixed channel field of view direction. For example, a field of view direction of an i-th channel corresponds to a vertical field of view direction of 40°, when a surface to be corrected 1 is at a first inclination angle, a readout data of a first corrective detector unit is used, and when a surface to be corrected 2 in a second inclination angle, a readout data of a second corrective detector unit is used, to ensure that both of the 2 corrective detector units corresponds to a vertical field of view direction of 40°, causing a receiving field of view of the LiDAR to remain stable at a fixed angle, and avoiding or decreasing detection angle fluctuation among the multiple reflection surfaces.

Specifically, as mentioned, the inclination angle of the surface to be corrected includes: a vertical inclination angle $\theta$ and a horizontal inclination angle $\varphi$; and in such a case, the corrector module 141 determines the multiple corrective detector units based on the vertical inclination angle $\theta$ and the horizontal inclination angle $\varphi$.

With reference to Fig. 14, a schematic diagram of a light path in a vertical field of view of the embodiment of LiDAR shown in Fig. 7 is shown.

Both emitted detection light and received echo light are reflected by the surface to be corrected $120r_i$, and the surface to be corrected $120r_i$ has an inclination angle, that is, there is an angle $\theta_i$ between an ideal position and orientation 120id; and an actual position and orientation 120re; of the surface to be corrected 120n. A position of a reflection point of the echo light $R_b$ in a field of view direction of the b-th channel (as shown by solid arrow $R_b$ and dotted arrow $R_b$' in the figure, where the solid arrow $R_b$ and the dotted arrow $R_b$' are parallel to each other, $R_b$ shows echo light projected at the actual position and orientation 120rei, and $R_b$' shows echo light projected at the ideal position and orientation 120idi) offsets on the surface to be corrected $120r_i$ (offset from point O' at the ideal position and orientation 120id; to point O at the actual position and orientation 120re;). In this case, an ideal detector unit $131id_b$ cannot receive the echo light in the field of view direction of the b-th channel. In this case, the ideal detector unit $131id_b$ actually receives echo light in a field of view direction $R_k$', there is an angle $\Delta\theta = 2*\theta_i$ between the $R_k$' and $R_b$'. The echo light in the field of view direction of the b-th channel is received by a corrective detector unit $130ch_b$.

Specifically, Fig. 14 shows a schematic light path in a vertical field of view.

The detector module 130 is located at a focal plane position of the optical receiving assembly Rx. Prior to compensation, an ordinate of a center position of a b-th ideal detector unit $131id_b$ is $y_b$. b is the channel number, and a vertical field angle of a field of view of the b-th channel corresponding to the b-th ideal detector unit $131id_b$ is $\theta_b$, that is, a vertical field angle of detection light emission corresponding to the echo light received by a b-th detector unit is:

$$\theta_b = \frac{y_b}{f},$$

f is the focal length of the optical receiving assembly Rx.

The corrector module 141 pre-stores n groups of inclination angles with one-to-one correspondence between the n reflection surfaces in the scanner module 120 and the n groups of inclination angles, and vertical inclination angles of the n reflection surfaces are $\theta_1$, $\theta_2$, ..., $\theta_n$ respectively. The vertical inclination angle corresponding to the surface to be corrected $120r_i$ is $\theta_i$. Both the emitted detection light and the received echo light are reflected by the surface to be corrected $120r_i$. In such a

case, an offset angle in a vertical direction of reflected light formed by reflection of the echo light $R_b$ in the field of view direction of the b-th channel from the surface to be corrected 120$r_i$ is $\Delta\theta=2*\theta_i$, that is, a position of the light spot formed by the reflected light on the detector module 130 is translated by $\Delta y=\Delta\theta*f$ along a corresponding direction. In such a case, the difference $\Delta y$ between an ordinate of a center position of the b-th corrective detector unit 130ch$_b$ and an ordinate of the center position of the b-th detector unit is determined by the corrector module 141. Moreover, a direction in which the center position of the b-th corrective detector unit points to the center position of the b-th detector unit is opposite to an offset direction of a reflection point position of the surface to be corrected 120n.

It can be seen that the corrective detector units determined by the corrector module 141 based on the inclination angle of the surface to be corrected reversely translate the region of interest in the detector module 130 by $\Delta y$. In such a case, for the b-th corrective detector unit 131ch$_b$, a vertical field angle of detection light emission corresponding to the received echo light is

$$\theta_b' = \frac{(y_b+\Delta y)}{f} + \Delta\theta = \theta_b$$

, that is, equal to a corresponding field angle when the surface to be corrected 120$r_i$ does not have an inclination angle (vertical inclination angle $\theta_i=0$).

With reference to Fig. 15, a schematic diagram of a light path in a horizontal field of view of the embodiment of LiDAR shown in Fig. 7 is shown.

The compensation principle in the horizontal field of view is similar to the compensation principle in the vertical field of view.

Specifically, Fig. 15 shows a schematic light path in the horizontal field of view.

Prior to compensation, an abscissa of a center position of the b-th ideal detector unit 131id$_b$ is $x_b$, b is the channel number. A horizontal field angle of a field of view of the b-th channel corresponding to the b-th ideal detector unit 131id$_b$ is $\varphi_b$, that is, a horizontal field angle of detection

$$\phi_b = \frac{x_b}{f},$$

light emission corresponding to the echo light received by the b-th detector unit is: f is the focal length of the optical receiving assembly Rx.

The corrector module 141 pre-stores n groups of inclination angles with one-to-one correspondence between the n reflection surfaces in the scanner module 120 and the n groups of inclination angles, and horizontal inclination angles of the n reflection surfaces are $\varphi_1$, $\varphi_2$, ..., $\varphi_n$ respectively. The horizontal inclination angle corresponding to the surface to be corrected 120$r_i$ is $\varphi_i$. Both the emitted detection light and the received echo light are reflected by the surface to be corrected 120$r_i$. In such a case, an offset angle in a horizontal direction of reflected light formed by reflection of the echo light $R_b$ in the field of view direction of the b-th channel from the surface to be corrected 120$r_i$ is $\Delta\varphi=2*\varphi_i$, that is, a position of the light spot formed by the reflected light on the detector module 130 is translated by $\Delta x=\Delta\varphi*f$ along a corresponding direction. In such a case, the difference $\Delta x$ between an abscissa of the center position of the b-th corrective detector unit 130ch$_b$ and an abscissa of the center position of the b-th detector unit is determined by the corrector module 141. Moreover, a direction in which the center position of the b-th corrective detector unit points to the center position of the b-th detector unit is opposite to an offset direction of a reflection point position of the surface to be corrected 120n.

It can be seen that the corrective detector units determined by the corrector module 141 based on the inclination angle of the surface to be corrected reversely translate the region of interest in the detector module 130 by $\Delta x$. In such a case, for the b-th corrective detector unit 131ch$_b$, a horizontal field angle of detection light emission corresponding to the received echo light is

$$\phi_b' = \frac{(x_b+\Delta x)}{f} + \Delta\phi = \phi_b$$

, that is, equal to a corresponding field angle when the surface to be corrected 120$r_i$ does not have an inclination angle (horizontal inclination angle $\varphi_i=0$).

In such a case, the corrective detector unit determined by the corrector module 141 can compensate for the inclination angle of the surface to be corrected to ensure that the determined detector unit corresponds to a fixed field of view direction. Particularly when the scanner module includes multiple reflection surfaces, the corrector module 141 determines different corrective detector units based on respective inclination angles of the multiple reflection surfaces, to ensure that each of the reflection surfaces corresponds to a fixed field of view direction based on the determined corrective detector unit, causing inhibition of the occurrence of point cloud jitter among the multiple reflective surfaces.

It should be noted that the ideal detector unit, such as the b-th ideal detector unit 131id$_b$ in Figs. 14 and 15, is a detector unit prior to compensation, that is, the detector unit 131 determined by calibration of the LiDAR in Fig. 8. The ideal detector unit includes two or more of the detectors, and the two or more detectors in the ideal detector unit are at least partially different from multiple detectors in the corrective detector unit.

It should be further noted that, as mentioned, in some embodiments of this disclosure, the detector module 130 includes multiple detectors 131i that are independently powered on and independently read out. In such a case, the corrector module 141 changes a receiving region of a receiving array by powering only a detector on a specific address wire or reading only a signal of a detector on a specific address wire, to achieve the purpose of maintaining a stable field of view.

Further with reference to Figs. 8 and 11, in some embodiments of this disclosure, the light-emitter module 110 of the LiDAR includes multiple independently addressable and independently controlled lasers. In such a case, the corrector module 141 is further configured to determine multiple corrective light-emitter units based on the inclination angle of the surface to be corrected in combination with the multiple corrective detector units. There is a one-to-one correspondence between the multiple corrective light-emitter units and the multiple corrective detector units.

The one-to-one correspondence between the multiple corrective light-emitter units and the multiple corrective detector units means that a corrective light-emitter unit and a corresponding corrective detector unit have a same field of view angle in a far field, that is, in the far field, an emission field of view angle of the corrective light-emitter unit is equal to a receiving field of view angle of the corresponding corrective detector unit. Specifically, the corrector module 141 applies different voltages to connection wires of the emission array, to select different emitters to emit light.

It should be noted that a light emitter module 110 of the LiDAR includes multiple emitters. In such a case, each of the corrective light-emitter units includes two or more of the emitters. Based on the determination of the corrective light-emitter unit by the corrector module 141, the receiving field of view angle of the corrective detector unit is the same as the emission field of view angle of the corrective light-emitter unit, to ensure the ranging capacity and the detection efficiency of the LiDAR.

Further with reference to Fig. 1, the processor apparatus 140 further includes: a collector module 142. The collector module 142 is configured to perform signal collection by the multiple corrective detector units to determine a point cloud image.

The collector module 142 includes a detection controller unit 142a. The detection controller unit 142a is configured to control the multiple corrective light-emitter units 111' to generate detection light. The detection light forms corresponding echo light after reflected by an object outside the LiDAR. The collector module 142 further includes a reception controller unit 142b. The reception controller unit 142b is configured to control a corresponding corrective detector unit to receive the echo light to collect signal.

Specifically, the detection light is emitted after reflected by the surface to be corrected; the emitted detection light forms echo light after reflected by an object outside the LiDAR; and the echo light is reflected by the surface to be corrected to the multiple corrective detector units. The surface to be corrected is one of the multiple reflection surfaces of the scanner apparatus.

Because the corrective detector unit 131 is determined by the collector module 142 prior to signal collection, and the corrective detector unit 131 is determined based on the inclination angle of the surface to be corrected, that is, positions of the corrective detector unit 131 has been changed to compensate for the deflection caused by the inclination angle of the surface to be corrected, thereby achieving the effects of maintaining a stable field of view.

In addition, with reference to Fig. 16, a schematic diagram of implementing signal collection by the corrective light-emitter units 111' and the corrective detector units 131 in the embodiment of the LiDAR shown in Fig. 8 is shown.

The corrective light-emitter unit 111' is determined based on the inclination angle of the surface to be corrected and the corrective detector unit 131. In such a case, when a signal is emitted or received, the light spot on the receiving array is still located at a center position of the corrective detector unit 131, that is, the corrective detector unit can receive all energy of an echo light spot in a field of view direction of a corresponding channel (the circle in the figure represents the light spot), to improve the detection efficiency and the ranging capacity.

It should be noted that, in other embodiments of this disclosure, as shown in Fig. 17, the LiDAR includes a light-emitter module, the light-emitter module 210 includes: multiple light-emitter units 211, and there is a one-to-one correspondence between the multiple light-emitter units 211 and the multiple corrective detector units 231; the collector module 142 enables the multiple light-emitter units 211 to generate detection light, the detection light forms corresponding echo light after reflected by an object outside the LiDAR; and the collector module 142 receives the echo light by a corresponding corrective detector unit 231 to collect signal.

To sum up, the multiple corrective detector units are determined based on the pre-stored inclination angle of the surface to be corrected to compensate for the inclination angle of the reflection surface; and signal collection is performed by the multiple corrective detector units to determine a point cloud image. Because the multiple corrective detector units are determined based on the inclination angle of the surface to be corrected, the determination of the corrective detector unit can compensate for the inclination angle of the surface to be corrected to ensure that the determined corrective detector unit corresponds to a fixed field of view direction. Particularly when the scanner module includes multiple reflection surfaces, different corrective detector units are determined based on respective inclination angles of the multiple reflection surfaces, to ensure that each of the reflection surfaces corresponds to the fixed field of view direction based on the determined corrective detector unit, causing inhibition of the occurrence of point cloud jitter among the multiple reflective surfaces.

Moreover, after the multiple corrective detector units are determined, the multiple corrective light-emitter units are determined based on the inclination angle of the surface to be corrected in combination with the multiple corrective detector units, to perform signal collection by the corrective light-emitter unit and the corrective detector unit. The determination of the multiple corrective light-emitter units can make a receiving field of view of the corrective detector units correspond to a light spot center of the received echo light, to improve the detection efficiency and ensure long ranging distance.

Although this disclosure is disclosed as above, this disclosure is not limited to the above. Any person skilled in the art may make various changes and modifications without departing from the spirit and scope of this disclosure, and therefore the scope of protection of this disclosure shall be subject to the scope limited by the claims.

## Claims

1. A detection method of a LiDAR, wherein the LiDAR comprises a scanner module, the scanner module comprises: at least one reflection surface; and the detection method comprises:

   determining a plurality of corrective detector units based on a pre-stored inclination angle of a surface to be corrected, wherein the surface to be corrected is one of the at least one reflection surface; and
   performing signal collection by the plurality of corrective detector units to determine a point cloud image.

2. The detection method of claim 1, wherein the scanner module comprises: a plurality of reflection surfaces;
   the detection method further comprises:

   determining the surface to be corrected prior to the determining the plurality of corrective detector units, wherein the surface to be corrected is one of the plurality of reflection surfaces;
   determining the inclination angle of the surface to be corrected based on the determined surface to be corrected; and
   in the step of the determining the plurality of corrective detector units, the plurality of corrective detector units are determined based on the determined inclination angle of the surface to be corrected, wherein the plurality of corrective detector units correspond to the surface to be corrected.

3. The detection method of claim 1 or 2, wherein the LiDAR comprises a light-emitter module, the light-emitter module comprises: a plurality of light-emitter units, and there is a one-to-one correspondence between the plurality of light-emitter units and the plurality of corrective detector units; and
   the step of the performing signal collection by the plurality of corrective detector units comprises:

   enabling the light-emitter unit to generate detection light, the detection light forming corresponding echo light after reflected by an object outside the LiDAR; and
   receiving the echo light by a corresponding corrective detector unit to collect signal.

4. The detection method of claim 1 or 2, wherein the detector method further comprises:

   determining, after the determining a plurality of corrective detector units, a plurality of corrective light-emitter units based on the inclination angle of the surface to be corrected in combination with the plurality of corrective detector units, wherein there is a one-to-one correspondence between the plurality of corrective light-emitter units and the plurality of corrective detector units; and
   the step of the performing signal collection by the plurality of corrective detector units comprises:

   enabling the plurality of corrective light-emitter units to generate detection light, the detection light forming corresponding echo light after reflected by an object outside the LiDAR; and
   receiving the echo light by corresponding corrective detector units to collect signal.

5. The detection method of claim 4, wherein each of the corrective light-emitter units comprises a plurality of emitters.

6. The detection method of claim 5, wherein the emitter is an independently addressable and independently controlled laser.

7. The detection method of claim 1 or 2, wherein each of the corrective detector units comprises a plurality of detectors.

8. The detection method of claim 7, wherein the detector is an independently addressable and independently controlled detector.

9. The detection method of claim 1, wherein the reflection surface rotates around a rotation shaft.

10. The detection method of claim 9, wherein the scanner module comprises: a rotating mirror, and the reflection surface is a mirror surface of the rotating mirror.

11. The detection method of claim 1, wherein the LiDAR comprises a light-emitter module to generate detection light;

the detection light is emitted after reflected by the surface to be corrected;

the emitted detection light forms echo light after reflected by an object outside the LiDAR; and

the echo light is reflected by the surface to be corrected to the plurality of corrective detector units.

12. The detection method of claim 1, wherein the inclination angle of the surface to be corrected comprises: a vertical inclination angle and a horizontal inclination angle; and

in the step of the determining the plurality of corrective detector units, the plurality of corrective detector units are determined based on the vertical inclination angle and the horizontal inclination angle.

13. A LiDAR, comprising:

a scanner module comprising: at least one reflection surface; and

a processor apparatus configured to perform the detection method of any one of claims 1-12.

14. A LiDAR, comprising:

a scanner module comprising: at least one reflection surface;

a corrector module pre-storing an inclination angle of a surface to be corrected and configured to determine a plurality of corrective detector units based on the inclination angle of the surface to be corrected, wherein the surface to be corrected is one of the at least one reflection surface; and

a collector module configured to perform signal collection by the plurality of corrective detector units to determine a point cloud image.

15. The LiDAR of claim 14, wherein the scanner module comprises: a plurality of reflection surfaces; the LiDAR further comprises:

a selector module configured to determine the surface to be corrected, wherein the surface to be corrected is one of the plurality of reflection surfaces; and

the corrector module determines the inclination angle of the surface to be corrected based on the surface to be corrected determined by the selector module, the corrector module determines the plurality of corrective detector units based on the determined inclination angle of the surface to be corrected, and the plurality of corrective detector units correspond to the surface to be corrected.

16. The LiDAR of claim 14 or 15, wherein the LiDAR comprises a light-emitter module, the light-emitter module comprises: a plurality of light-emitter units, and there is a one-to-one correspondence between the plurality of light-emitter units and the plurality of corrective detector units; and

the collector module comprises:

a detection controller unit configured to control the light-emitter unit to generate detection light, the detection light forming corresponding echo light after reflected by an object outside the LiDAR; and

a reception controller unit configured to control a corresponding corrective detector unit to receive the echo light for signal collection.

17. The LiDAR of claim 14 or 15, wherein the corrector module is further configured to determine a plurality of corrective light-emitter units based on the inclination angle of the surface to be corrected in combination with the plurality of corrective detector units, wherein there is a one-to-one correspondence between the plurality of corrective light-emitter units and the plurality of corrective detector units; and

the collector module comprises:

a detection controller unit configured to control the plurality of corrective light-emitter units to generate detection light, the detection light forming corresponding echo light after reflected by an object outside the LiDAR; and

a reception controller unit configured to control a corresponding corrective detector unit to receive the echo light to collect signal.

18. The LiDAR of claim 17, wherein each of the corrective light-emitter units comprises a plurality of emitters.

19. The LiDAR of claim 18, wherein the emitter is an independently addressable and independently controlled laser.

20. The LiDAR of claim 19, wherein the emitter comprises: a vertical cavity surface emitting laser.

21. The LiDAR of claim 14 or 15, wherein each of the corrective detector units comprises a plurality of detectors.

22. The LiDAR of claim 21, wherein the detector is an independently addressable and independently controlled detector.

23. The LiDAR of claim 22, wherein the detector comprises: a single photon avalanche diode.

24. The LiDAR of claim 14, wherein the reflection surface rotates around a rotation shaft.

25. The LiDAR of claim 24, wherein the scanner module comprises: a rotating mirror, and the reflection surface is a mirror surface of the rotating mirror.

26. The LiDAR of claim 14, wherein the LiDAR comprises a light-emitter module to generate detection light;

the detection light is emitted after reflected by the surface to be corrected;
the emitted detection light forms echo light after reflected by an object outside the LiDAR; and
the echo light is reflected by the surface to be corrected to the plurality of corrective detector units.

27. The LiDAR of claim 14, wherein the inclination angle of the surface to be corrected comprises: a vertical inclination angle and a horizontal inclination angle; and
the corrector module determines the plurality of corrective detector units based on the vertical inclination angle and the horizontal inclination angle.

12r

Rx

12

Tx

11

13

**FIG. 1**

**FIG. 2**

**FIG. 3**

**FIG. 4**

**FIG. 5**

FIG. 6

**FIG. 7**

FIG. 8

**FIG. 9**

FIG. 10

```
┌─────────────────────────────────────────┐      ╭─ S131
╎  determine surface to be corrected, surface to be  ╎
╎  corrected is one of multiple reflection surfaces  ╎
└─────────────────────────────────────────┘

┌─────────────────────────────────────────┐      ╭─ S132
╎ determine inclination angle of surface to be corrected ╎
╎     based on determined surface to be corrected     ╎
└─────────────────────────────────────────┘

┌─────────────────────────────────────────┐      ╭─ S110
│  determine multiple corrective detector units based on │
│  pre-stored inclination angle of surface to be corrected, │
│  surface to be corrected is one of at least one reflection │
│                   surface                  │
└─────────────────────────────────────────┘

┌─────────────────────────────────────────┐      ╭─ S140
╎     determine multiple corrective light-emitter units     ╎
╎  based on inclination angle of surface to be corrected  ╎
╎    in combination with multiple corrective detector    ╎
╎  units, there is one-to-one correspondence between   ╎
╎   multiple corrective light-emitter units and multiple   ╎
╎           corrective detector units          ╎
└─────────────────────────────────────────┘

┌─────────────────────────────────────────┐      ╭─ S120
│    perform signal collection by multiple corrective    │
│  detector units to determine point cloud image   │
└─────────────────────────────────────────┘
```

**FIG. 11**

120 122 121

120i

**FIG. 12**

230

220i 232

231

**FIG. 13**

**FIG. 14**

**FIG. 15**

**FIG. 16**

**FIG. 17**

140

processor apparatus

143

selector module

141

corrector module

142

142a

collector module

detection
controller unit

142b

reception
controller unit

**FIG. 18**

# INTERNATIONAL SEARCH REPORT

| International application No. |
| --- |
| **PCT/CN2022/098786** |

| A. | CLASSIFICATION OF SUBJECT MATTER |
| --- | --- |

G01S 7/497(2006.01)i

According to International Patent Classification (IPC) or to both national classification and IPC

| B. | FIELDS SEARCHED |
| --- | --- |

Minimum documentation searched (classification system followed by classification symbols)

G01S17; G01S7

Documentation searched other than minimum documentation to the extent that such documents are included in the fields searched

Electronic data base consulted during the international search (name of data base and, where practicable, search terms used)

CNTXT, ENTXTC, VEN, CNKI, 万方, WANFANG, 百度学术, BAIDU SCHOLAR: 激光, 雷达, 反射面, 姿态, 倾角, 俯仰角, 光路, 视场, 方向, 定向, 对准, 对应, 抖动, 补偿, 调整, 调节, 改变, 校正, 偏差, 接收, 像素, 区域, 探测, laser, lidar, view, calibrat+, adjust+, pixel, receiv+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021228815 A1 (ROBERT BOSCH GMBH) 18 November 2021 (2021-11-18) description, paragraphs 9-26 and 46-61, and figure 1 | 1-27 |
| A | CN 109870700 A (LEISHEN INTELLIGENT SYSTEM CO., LTD.) 11 June 2019 (2019-06-11) entire document | 1-27 |
| A | CN 113447933 A (SHANGHAI HESAI TECHNOLOGY CO., LTD.) 28 September 2021 (2021-09-28) entire document | 1-27 |
| A | CN 112955778 A (SUTENG INNOVATION TECHNOLOGY CO., LTD.) 11 June 2021 (2021-06-11) entire document | 1-27 |
| A | CN 113204004 A (BEIJING HANGJI TECHNOLOGY CO., LTD.) 03 August 2021 (2021-08-03) entire document | 1-27 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 September 2022** | **29 September 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/098786** |

**C.    DOCUMENTS CONSIDERED TO BE RELEVANT**

| Category* | Citation of document, with indication, where appropriate, of the relevant passages | Relevant to claim No. |
|---|---|---|
| A | CN 111090085 A (LITE-ON ELECTRONIC (GUANGZHOU) CO., LTD. et al.) 01 May 2020 (2020-05-01) <br>       entire document | 1-27 |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/CN2022/098786**</td></tr>
</table>

| Patent document cited in search report | | | Publication date (day/month/year) | Patent family member(s) | | | Publication date (day/month/year) |
|---|---|---|---|---|---|---|---|
| WO | 2021228815 | A1 | 18 November 2021 | DE | 102020206006 | A1 | 18 November 2021 |
| CN | 109870700 | A | 11 June 2019 | | None | | |
| CN | 113447933 | A | 28 September 2021 | | None | | |
| CN | 112955778 | A | 11 June 2021 | | None | | |
| CN | 113204004 | A | 03 August 2021 | | None | | |
| CN | 111090085 | A | 01 May 2020 | | None | | |

Form PCT/ISA/210 (patent family annex) (January 2015)

**REFERENCES CITED IN THE DESCRIPTION**

**Patent documents cited in the description**

• CN 202111659798